**Europäisches Patentamt**

**European Patent Office**

**Office européen des brevets**

(19)

(11) Numéro de publication : **0 336 798 B1**

## (12) FASCICULE DE BREVET EUROPEEN

(45) Date de publication du fascicule du brevet :
26.08.92 Bulletin 92/35

(51) Int. Cl.⁵ : **A23L 1/317**

(21) Numéro de dépôt : **89400692.3**

(22) Date de dépôt : **14.03.89**

(54) **Procédé et appareil pour la préparation de produits alimentaires composés de feuilles de viande.**

(30) Priorité : **15.03.88 FR 8803315**

(43) Date de publication de la demande :
**11.10.89 Bulletin 89/41**

(45) Mention de la délivrance du brevet :
**26.08.92 Bulletin 92/35**

(84) Etats contractants désignés :
**AT BE CH DE ES FR GB GR IT LI LU NL SE**

(56) Documents cités :
**AU-B-11 422 176**
**DE-A- 3 143 755**
**US-A- 4 210 677**

(73) Titulaire : **FRADIN, Maurice**
**Residence le Jean Bart 19, Esplanade de la Mer**
**F-85160 St. Jaen de Monts (FR)**

(72) Inventeur : **FRADIN, Maurice**
**Residence le Jean Bart 19, Esplanade de la Mer**
**F-85160 St. Jaen de Monts (FR)**

(74) Mandataire : **Marquer, Francis et al**
**Cabinet Moutard 35, Avenue Victor Hugo**
**F-78960 Voisins le Bretonneux (FR)**

**Description**

La présente invention concerne un procédé de préparation de produits alimentaires composés de feuilles de viande, ainsi qu'un appareillage pour la mise en oeuvre de ce procédé.

D'une manière générale, on sait que de nombreux essais ont été effectués en vue de reconstituer des portions de viande telles que biftecks, rôtis, escalopes ou similaires, à partir de viande hachée ou en morceaux, avec ou sans utilisation d'un liant.

Ces essais ont montré qu'il était possible d'aboutir à un produit final (viande feuilletée) de tenue et de qualité gustative particulièrement bonnes, avec une texture relativement homogène et proche de celle des muscles, grâce à un procédé décrit dans le brevet français N° 2 595 039, comprenant les phases opératoires suivantes :

– le malaxage de morceaux de viande d'épaisseur relativement faible avec injection de neige carbonique ou autre agent réfrigérant ;

– la mise en forme du mélange réfrigéré pour constituer des blocs faciles à trancher en feuilles ;

– le tranchage en feuilles ultrafines de ces blocs ; et

– la reconstitution de morceaux de viande par mise en forme des tranches ainsi obtenues, de préférence avec un liant.

Il s'avère qu'en dépit des bons résultats obtenus par ce procédé au stade expérimental et sur des petites quantités, il n'a pas encore été possible d'aboutir à un processus industriel qui permette de garantir la qualité du produit dans le cas d'une production en grande quantité.

L'une des principales raisons de cet échec réside principalement dans le fait que les machines à trancher existant à l'heure actuelle ne permettent pas d'obtenir, à partir des blocs précités, des tranches suffisamment fines, sans altération de la texture de la viande. Il s'avère, au contraire, que malgré l'emploi de lames rotatives à très haut pouvoir tranchant, on constate que les fibres de la viande ne sont pas toujours correctement coupées et sont sujettes à des phénomènes d'arrachement, de sorte que l'on obtient des tranches dans lesquelles la viande est déchiquetée plutôt que tranchée.

Ce phénomène est par ailleurs accentué en raison des dimensions relativement faibles des morceaux de viande constituant le bloc, et du fait que la température de la viande (de l'ordre de 0 à -5°C) n'est pas suffisamment basse pour que l'ensemble du bloc présente une dureté suffisante pour éliminer les inconvénients précités. Or, un abaissement de cette température conduirait à la congélation de la viande et, par conséquent, à un résultat inacceptable.

En vue de résoudre ce problème, a priori insurmontable, l'invention propose une solution ayant trait, tout d'abord, au mode de tranchage des blocs de viande que l'on veut découper en tranches minces.

Cette solution est basée sur la constatation que, lorsque l'on effectue, par un procédé classique, le tranchage d'un morceau de viande, la zone de viande située du côté où pénètre la lame subit une contrainte en arrachement, tandis que la zone située du côté opposé subit une contrainte en tassement.

En conséquence, si l'entame du bloc de viande s'effectue toujours du même côté, la zone de viande où s'effectue cette entame se détériorera de plus en plus et, parallèlement, la coupe sera de plus en plus mauvaise.

Pour supprimer cet inconvénient, dans le cadre d'un procédé de préparation de produits alimentaires composés de feuilles de viande, ce procédé comprenant, de façon connue, une phase de refroidissement de morceaux de viande se présentant, de préférence, sous la forme de lanières, une phase de moulage en blocs des morceaux refroidis, une phase de tranchage des blocs en feuilles ultrafines, et une phase de mise en forme des paquets de tranches, en vue d'obtenir un produit fini, prêt à la consommation, l'invention propose d'effectuer le tranchage des blocs à l'aide d'une lame de préférence rotative en pratiquant l'entame alternativement d'un côté puis de l'autre du bloc.

De ce fait, à chaque entame, le tranchant de la lame pénètrera dans une zone ayant précédemment subi une contrainte de tassement et dans laquelle les fibres auront subi une orientation favorable à la coupe (la coupe s'effectuera à rebrousse-poil).

A cette disposition, l'invention propose en outre d'associer l'une des dispositions suivantes ayant trait à la texture du bloc de viande que l'on veut découper en tranches minces.

En ce qui concerne l'une de ces dispositions, elle résulte de la constatation que, moyennant un traitement approprié, il était possible d'obtenir des blocs dans lesquels les morceaux de viande présentent à coeur la température requise mais présentent, à leur superficie, une zone pelliculaire dont la température est amenée à une valeur plus basse, de l'ordre de -30°C à -40°C. A l'intérieur du bloc, les zones pelliculaires des différents morceaux se collent les unes aux autres en formant une sorte de structure alvéolaire relativement rigide, dans laquelle chacune des alvéoles contient un morceau de viande qui demeure à la température souhaitée.

Une autre disposition consiste à réaliser les blocs de viande selon un processus comprenant les étapes suivantes :

– la réalisation de morceaux de viande se présentant sous la forme de lanières,

– le malaxage des morceaux de viande avec injection de neige carbonique, de manière à abaisser la température des morceaux à une valeur sensiblement comprise entre 0°C et -2°C, et à obtenir un amas de morceaux enchevêtrés les uns avec les autres,

– le pressage, à une pression de l'ordre de 8 à 12 bars, de quantités déterminées de ces morceaux, de manière à réaliser des blocs de viande présentant une bonne cohésion ;

– le stockage temporaire, avant tranchage, dans une enceinte à l'intérieur de laquelle la température est maintenue à une valeur de l'ordre de -5°C.

On constate que, grâce à cette disposition, la viande des blocs ainsi réalisés n'est pas altérée par la congélation et conserve ses qualités gustatives. La cohésion des blocs résulte à la fois des propriétés mécaniques de la viande à une température voisine de 0°C et de la compression (sous pression élevée) des lanières de viande enchevêtrées qui, à cette température, conservent leur forme à l'intérieur du bloc.

Dans tous les cas, les feuilles de viande ainsi obtenues pourront alors être recueillies dans un bac dans lequel est effectuée une pulvérisation continue d'un liant approprié, par exemple du blanc d'oeuf.

Avantageusement, ce bac pourra être monté rotatif et recevoir des tranches de différentes épaisseurs, par exemple issues de plusieurs appareils de tranchage ou d'un appareil à éléments de tranchage multiples.

Le produit obtenu se présente alors sous la forme de tas plus ou moins réguliers qui, après passage éventuel sous vide ou sous press, présentent la texture d'un muscle et sont aptes à être mis en forme, soit au moyen d'une presse pour obtenir des rôtis que l'on pourra ensuite éventuellement trancher ou prétrancher, soit au moyen d'une formeuse classique de biftecks.

Selon un autre mode d'exécution avantageux, les tranches, une fois découpées, tombent directement sur un transporteur à double vis sans fin qui les amène au poste de mise en forme, la pulvérisation du liant s'effectuant dans la zone de chute libre des tranches au sortir de l'appareil de tranchage.

Bien entendu, l'invention concerne également un appareillage pour la mise en oeuvre du procédé précédemment défini, cet appareillage faisant intervenir des moyens de transport aptes à acheminer les morceaux de viande depuis un poste de production jusqu'à la goulotte d'accès à un dispositif de pressage ou d'extrusion apte à assurer une compression des morceaux de manière à produire à sa sortie, de façon continue ou discontinue, un bloc composé de morceaux agglomérés les uns aux autres, des moyens de tranchage disposés de manière à découper en tranches fines ledit bloc, et des moyens de réception desdites tranches.

Selon l'invention, cet appareillage est plus particulièrement caractérisé en ce que les moyens de tranchage comprennent des moyens de guidage des blocs selon un axe déterminé, ainsi qu'au moins un disque rotatif placé dans un plan perpendiculaire ou, éventuellement, oblique par rapport audit axe, lesdits moyens de guidage et ledit disque étant animés d'un mouvement relatif l'un par rapport à l'autre, selon une course au moins égale à la somme du diamètre du disque et de la longueur de coupe du bloc, de manière à ce que, lors de la course aller, l'entame s'effectue d'un premier côté du bloc et que, lors de la course de retour, l'entame s'effectue au niveau d'un second côté opposé au premier.

Pour les raisons précédemment exposées (texture des blocs et alternance de l'entame), il devient possible de produire au stade industriel des tranches présentant la finesse requise avec la consistance souhaitée pour obtenir ensuite un produit final de très haute qualité.

Des modes d'exécution de l'appareillage selon l'invention seront décrits ci-après, à titre d'exemples non limitatifs, avec référence aux dessins annexés dans lesquels :

La figure 1 est une représentation schématique en coupe d'un premier mode d'exécution d'un appareillage pour la fabrication de produits alimentaires selon l'invention ;

La figure 2 est une coupe schématique montrant une variante d'exécution des moyens de transport utilisés dans un appareillage du type de celui représenté figure 1 ;

Les figures 3 à 5 sont des coupes axiales schématiques de deux variantes d'exécution du dispositif d'extrusion ;

La figure 6 est une vue schématique de dessus d'une machine de tranchage, de type à translation, équipée d'une pluralité d'organes de tranchage associés, chacun, à un dispositif d'extrusion respectif ;

La figure 7 est une vue schématique de dessus d'une machine de tranchage, de type rotatif, à organes de tranchage multiples.

La figure 8 est une représentation schématique, en coupe, d'un second mode d'exécution d'un appareillage pour la fabrication de produits alimentaires selon l'invention ;

La figure 9 est une coupe schématique, selon la flèche F de la figure 1, de l'appareil de tranchage ;

La figure 10 est une vue de dessus de l'appareil de tranchage représenté figure 9 ;

La figure 11 est une coupe schématique selon BB' de la figure 1 ;

La figure 12 est une coupe schématique selon AA' de la figure 1 ;

La figure 13 est une coupe axiale schématique d'une variante d'exécution des moyens de mise en forme du produit, utilisable dans l'appareillage représenté figure 1.

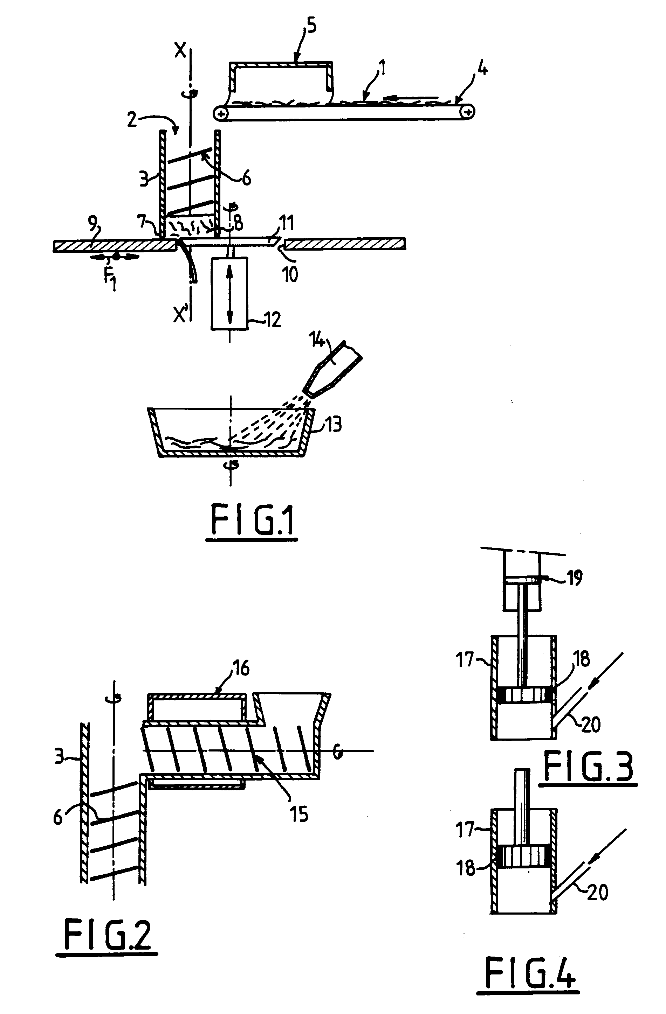

Dans l'exemple représenté sur la figure 1, les morceaux de viande 1 sont transportés jusqu'à l'orifice d'accès 2 d'un dispositif d'extrusion, grâce à un convoyeur à bande sans fin 4. Sur le trajet de ce convoyeur 4 est disposé un poste de refroidissement 5, par exemple à injection de neige carbonique, conçu de manière à effectuer un refroidissement brutal de la superficie des morceaux 1 puis, grâce à une vitesse d'avance convenablement réglée du convoyeur, un abaissement de la température à coeur des morceaux 1 jusqu'à une valeur de l'ordre de 0 à -5°C.

Le dispositif d'extrusion comprend un corps tubulaire cylindrique 3 vertical, à l'intérieur duquel est montée rotative une vis sans fin coaxiale 6 dont l'extrémité inférieure, située à une distance déterminée de l'orifice de sortie 7 du corps 3 délimite, avec ce dernier, une chambre d'extrusion 8. L'orifice de sortie 7 du corps débouche sur le plateau 9 d'une machine à trancher qui s'étend perpendiculairement à l'axe XX' du corps 3.

Ce plateau 9, mobile en translation dans son plan selon un mouvement alternatif indiqué par les flèches $F_1$, présente un orifice circulaire 10 de diamètre supérieur au diamètre du corps 3.

Au niveau de cet orifice 10 est monté rotatif un disque de tranchage 11 coaxial, entraîné en rotation par un moteur 12. Des moyens non représentés permettent d'assurer un réglage en position axiale du disque 11 relativement à la position du plateau 9.

Il convient de noter par ailleurs que l'orifice inférieur 7 du corps 3 est situé à une distance prédéterminée du plateau 9, cette distance pouvant être réglée en fonction de la consistance des blocs ressortant du dispositif d'extrusion et de l'épaisseur des tranches que l'on veut obtenir.

Le fonctionnement de cet appareil est alors le suivant :

A l'entrée du dispositif d'extrusion, les morceaux de viande 1 présentent une température superficielle relativement basse, de l'ordre de -30°C et une température à coeur de l'ordre de 0 à -6°C.

Ces morceaux sont alors entraînés par la vis sans fin 6 et vont être tassés dans la chambre d'extrusion 8. En raison de leur basse température, les parois des morceaux 1 vont se coller les unes aux autres en réalisant des cloisonnements relativement durs qui confèrent à l'ensemble une structure alvéolaire contenant, dans chacune de ses alvéoles, un morceau de viande dont la température est inférieure à la température de congélation et dont la consistance est, par conséquent, plus tendre.

Dans la chambre d'extrusion 8, le bloc ainsi formé est poussé contre le plateau 9 de la machine de tranchage. Le tranchant du disque de tranchage 11 est alors disposé en position intermédiaire entre le plateau 9 et l'orifice de sortie 7 du corps 3, la distance entre le tranchant et le plateau 9 déterminant l'épaisseur des tranches que l'on désire obtenir.

Le tranchage s'obtient en déplaçant l'ensemble constitué par le plateau 9 et le disque 11 selon un mouvement alternatif d'amplitude suffisante pour que l'entame s'effectue successivement d'un côté et de l'autre de la portion de bloc ressortant du dispositif d'extrusion.

Les tranches ainsi obtenues tombent dans un récipient 13 monté rotatif, dans lequel une buse 14 pulvérise, en permanence, un liant par exemple à base de blanc d'oeuf.

De préférence, ce bac (ainsi qu'éventuellement l'ensemble de la machine) est renfermé dans une enceinte éventuellement refroidie par tous moyens connus. Par ailleurs, cette enceinte peut être mise en surpression avec un gaz tel que du $CO_2$.

Bien entendu, l'invention ne se limite pas au mode d'exécution précédemment décrit.

Ainsi, par exemple, les moyens de transport des morceaux de viande pourraient consister en une vis sans fin 15 associée à des moyens de refroidissement 16, comme représenté sur la figure 2.

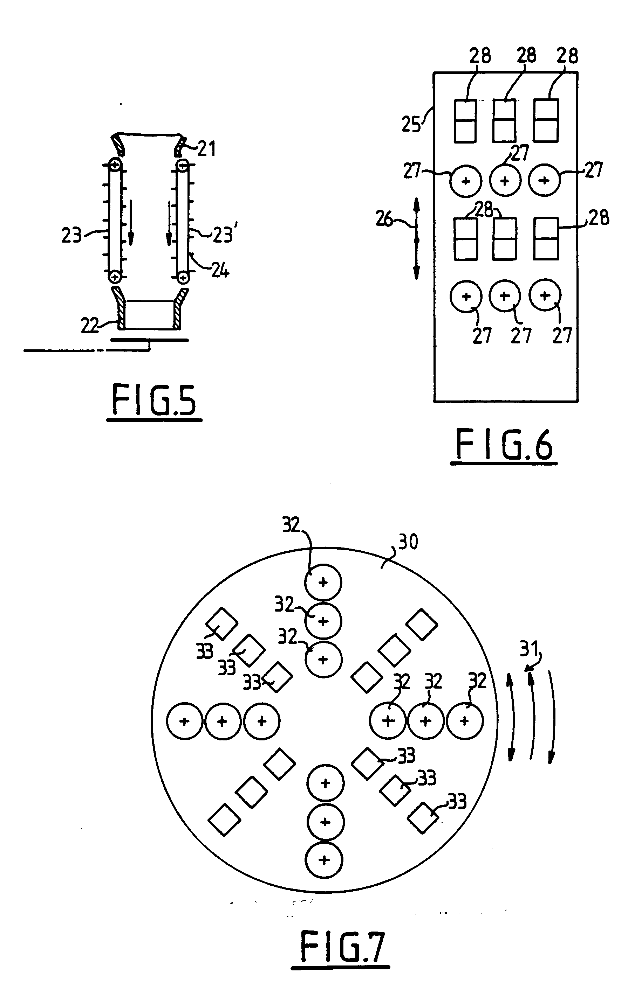

De même, le dispositif d'extrusion pourrait consister en un cylindre 17, à l'intérieur duquel est monté un piston 18 mû par un vérin 19 (figure 3) ou simplement par son propre poids (figure 4). Dans un cas comme dans l'autre, la chambre d'extrusion pourra être connectée à une buse d'injection 20 d'un fluide de refroidissement, par exemple de neige carbonique, pour éviter tout réchauffement du bloc.

Selon un autre mode d'exécution, le dispositif d'extrusion pourra comprendre, entre une trémie d'entrée 21 et une goulotte de sortie 22, des moyens d'entraînement pouvant consister en des bandes sans fin 23, 23' munies de nervurations 24 ou des picots (figure 5).

Comme précédemment mentionné, l'appareil de tranchage pourra comprendre, montés sur un même plateau 25 mobile en translation selon un mouvement alternatif (flèche 26), une pluralité de disques tranchants 27 situés au droit d'orifices correspondants. Dans ce cas, à chacun de ces disques 27 est associé un ensemble de transport et d'extrusion dont les orifices de sortie ont été représentés par des rectangles 28 (figure 6).

Chacun des disques 27 peut alors être réglé de manière à obtenir des tranches d'épaisseurs différentes qui tombent dans un même récipient. Le produit obtenu présente alors une meilleure consistance.

Un même résultat est également obtenu en utilisant un plateau circulaire 30 doué d'un mouvement de rotation alternatif (flèches 31).

Tel que représenté sur la figure 7, ce plateau 30 comprend, alignées sur deux axes diamétraux perpendiculaires, quatre séries d'ensembles orifice/disque 32 tranchant, chaque série comprenant trois ensembles orifice/disque radialement alignés. Dans ce cas, à chacun de ces ensembles est associé un ensemble de transport et d'extrusion dont l'orifice de sortie a été représenté par un rectangle 33.

Ces orifices sont disposés par séries de trois sur chacune des bissectrices des angles droits formés par les deux susdits axes diamétraux.

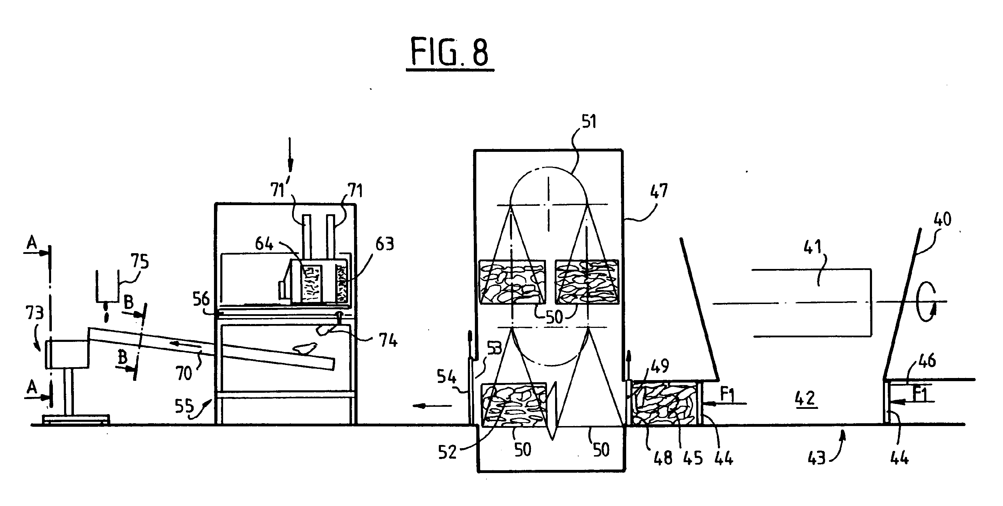

Dans le mode d'exécution représenté sur la figure 8, les morceaux de viande, de préférence sous forme de lanières, sont amenés dans une trémie 40 dans laquelle ils sont malaxés au moyen d'un malaxeur rotatif 41, de manière à faire en sorte qu'ils s'entremêlent aléatoirement dans le fond de la trémie 40 selon une configuration tridimensionnelle interdigitée.

Au cours de ce malaxage, les blocs de viande sont refroidis à une température de l'ordre de 0°C à -1°C, grâce à une injection de neige carbonique.

Le fond de la trémie est conformé de manière à servir de chambre d'alimentation 42 d'un dispositif de pressage 43 faisant intervenir un piston de pressage 44 mû par un vérin et une chambre de pressage 45 qui prolonge la chambre d'alimentation 42 dans l'axe longitudinal de cette dernière. Le piston 44 présente une section sensiblement égale à celle desdites chambres 42, 45 et est monté coulissant dans ces dernières, le long dudit axe. Ce piston 44 est prolongé d'un côté par une paroi 46 servant à éviter toute descente de morceaux de viande dans la région de la chambre d'alimentation 42 située du côté du piston opposé à la chambre de pressage 45. La chambre de pressage 45 débouche dans une enceinte de stockage 47 (zone tampon) par un orifice 48 obturable par une porte coulissante 49 qui s'étend dans un plan de section droite de la chambre 45.

Le fonctionnement de ce dispositif de pressage est alors le suivant :

Au repos, le piston 44 occupe une position effacée, à l'opposé de la chambre de pressage 45, de manière à libérer la totalité du volume de la chambre d'alimentation 42. Cette dernière peut alors recevoir les morceaux de viande préalablement malaxés dans la trémie 40. Une fois cette chambre 42 remplie, le piston 44 amorce une course de pressage dans le sens des flèches $F_1$, de manière à refouler les blocs de viande dans la chambre de pressage 45 qui se trouve alors refermée par la porte coulissante 49. En fin de course de pressage, le piston 44 pénètre dans la chambre de pressage 45 jusqu'à ce qu'il applique à la masse de viande qui s'y trouve contenue, une pression de l'ordre de 10 bars. A cette pression, la masse de viande forme un bloc qui est ensuite éjecté dans l'enceinte de stockage 47 à la suite des deux opérations successives suivantes :
- l'ouverture de la porte coulissante 49,
- l'exécution d'une course d'éjection du piston 44 qui amène ce dernier jusqu'au niveau de l'orifice 48.

A l'intérieur de l'enceinte 47, le bloc ainsi produit est amené sur le plateau 50 d'un dispositif de transport et de stockage comprenant une chaîne 51 montée sur des roues haute et basse de manière à former une boucle fermée verticale sur laquelle sont suspendus des plateaux 50. Ces roues sont entraînées pas à pas, de manière à ce qu'à chaque pas, un plateau 50 est présenté devant l'orifice d'accès 48 pour recevoir un bloc de viande, tandis qu'un autre plateau 50, portant un bloc de viande 52, est amené en regard d'un orifice de sortie 53, de manière à pouvoir être extrait en vue de son tranchage. Cet orifice de sortie 53 est muni d'une porte coulissante 54 destinée à refermer l'enceinte 47 entre chaque extraction et à réduire autant que possible un réchauffement de l'atmosphère contenue dans cette enceinte 47. En effet, cette atmosphère est portée à une température de l'ordre de -5°C, de manière à maintenir sensiblement constante la température des blocs (de 0°C à -2°C).

Le tranchage des blocs provenant de l'enceinte de stockage est assuré par une machine de tranchage se présentant sous la forme d'une table 55 dont le plateau horizontal 56 présente deux orifices 57, 58 au-dessus desquels sont montés rotatifs deux disques de tranchage horizontaux 59, 60 réglables en hauteur grâce à une manivelle M, l'écart entre la hauteur du plateau 56 et celle des disques 59, 60 déterminant l'épaisseur des tranches que l'on souhaite réaliser. Au-dessus du plateau 56 est en outre prévue une structure 61 montée oscillante dans un plan horizontal autour d'un axe vertical 62, cette structure portant deux magasins 63, 64 angulairement décalés par rapport à l'axe 62.

Ces magasins 63, 64 délimitent chacun, au-dessus du plateau 56, un volume de passage des blocs 52 axé verticalement, de section droite sensiblement égale à celle des blocs 52. Ils présentent un orifice d'accès 65, 66 par lequel les blocs peuvent être introduits et un orifice de sortie 67, 68 situé à une hauteur légèrement supérieure à celle des disques 59, 60.

Des vérins presseurs 71, 71' sont en outre prévus pour assurer le déplacement des blocs 52 à l'intérieur des magasins 63, 64, en direction du plateau 56.

Le fonctionnement de cette machine de tranchage est alors le suivant :

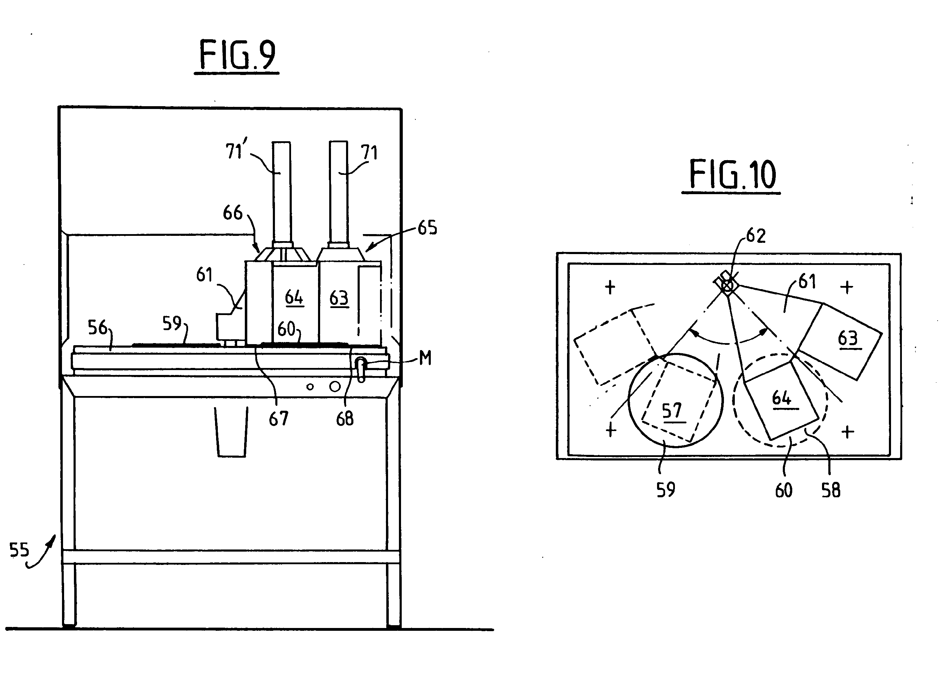

Au repos, la structure oscillante 61 se trouve dans la position représentée sur la figure 10, position dans laquelle le magasin 63 se trouve au-dessus de la table 56, tandis que le magasin 64 est au-dessus du disque 60, les blocs de viande 52 contenus dans ces magasins 63, 64 venant respectivement en appui (sous l'effet des vérins 71, 71') sur la table 56 et sur le disque 60.

La structure oscillante 61 est alors entraînée en rotation dans un premier sens (vers la gauche de la figure 10) jusqu'à ce que les magasins 63, 64 occupent les positions respectives représentées en traits interrompus.

Au cours de cette rotation, le bloc 52 contenu dans le magasin 64 sera tranché une seule fois par le disque 59 avec l'entame effectuée sur son côté gauche, tandis que le bloc 52 contenu dans le magasin 63 subira deux tranchages successifs, respectivement par les disques 60 et 59 avec les entames effectuées sur son côté gauche.

La structure oscillante 61 est ensuite entraînée en rotation dans un deuxième sens (à droite de la figure 10) jusqu'à ce que les magasins 63, 64 retournent dans leur position initiale représentée en traits pleins.

Au cours de cette course de retour, le bloc contenu dans le magasin 63 sera tranché une seule fois par le disque 60, avec l'entame effectuée sur son côté droit, tandis que le bloc contenu dans le magasin 64 subira deux tranchages successifs, respectivement par les disques 59 et 60 avec les entames effectuées sur son côté droit.

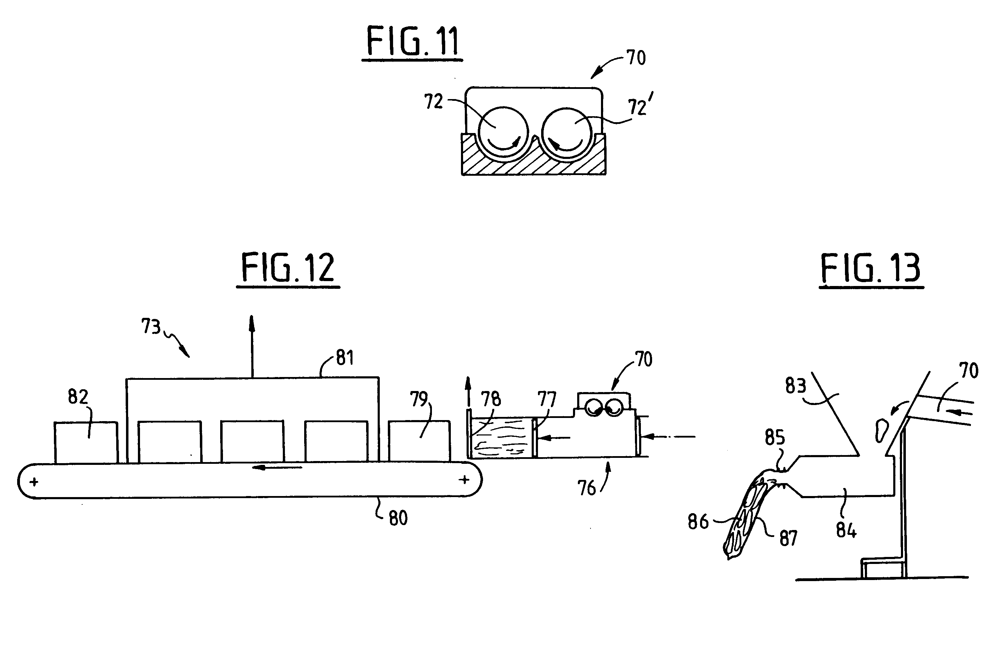

Les tranches découpées par les disques 59, 60 passent par les orifices 57, 58 et tombent en chute libre sur un transporteur 70 à deux vis sans fin 72, 72' tournant en sens inverse, qui les amène jusqu'au poste de mise en forme des produits définitifs 73 (figure 11).

Au cours de leur chute libre, elles sont imprégnées d'un liant pulvérisé grâce à une buse de pulvérisation 74. Une adjonction de lait peut être en outre effectuée dans le trajet qui les mène jusqu'au poste de mise en forme 73 et ce, grâce à un goutte à goutte 75.

Dans cet exemple, le poste de mise en forme comprend un dispositif de pressage 76 d'un type similaire à celui équipant la goulotte 40, dans lequel les tranches accumulées dans une chambre d'alimentation sont conformées sous pression, par un piston 77 contre une porte coulissante 78 pour former ainsi des portions de viande reconstituées 79. Ces portions sont ensuite entraînées grâce à un transporteur à bande 80 dans un poste de mise sous vide 81 où s'effectue un tassement supplémentaire des tranches, à l'intérieur des portions. A la sortie de ce poste, les portions 82 se trouvent dans leur état définitif, prêtes à être cuisinées (figure 12).

Il convient de noter toutefois que la mise en forme des produits pourrait être réalisée au moyen d'une extrudeuse, telle que celle représentée sur la figure 13, qui comprend :
- une goulotte d'accès 83 qui reçoit les tranches provenant du transporteur 70,
- une chambre d'extrusion 84, par exemple à vis hélicoïdale, et
- une tête d'extrusion 85 par laquelle ressortent les produits finis 86.

Ces produits 86 peuvent être enveloppés, au moment de leur sortie, par une gaine 87 stockée préalablement sur la tête d'extrusion 85 (figure 13).

## Revendications

1. Procédé de préparation de produits alimentaires composés de feuilles de viande, ce procédé comprenant une phase de refroidissement de morceaux de viande se présentant, de préférence, sous la forme de lanières, une phase de moulage en blocs des morceaux refroidis, une phase de tranchage des blocs en feuilles ultrafines, et une phase de mise en forme des paquets de tranches, en vue d'obtenir un produit fini, prêt à la consommation,
caractérisé en ce que le tranchage des blocs est effectué à l'aide d'une lame, de préférence rotative, en pratiquant l'entame alternativement d'un côté et de l'autre du bloc.

2. Procédé selon la revendication 1,
caractérisé en ce que la phase de refroidissement est assurée au moyen d'un réfrigérant énergique, apte à refroidir rapidement la superficie des morceaux à une température comprise entre -30° et - 40°C, cette phase de refroidissement étant suivie d'une phase de stabilisation effectuée de manière à ce qu'à son terme, la température à l'intérieur des morceaux atteigne une température comprise entre 0 et -6°C.

3. Procédé selon la revendication 1,
caractérisé en ce que les blocs de viande sont réalisés selon un processus comprenant les phases suivantes :
   – la réalisation de morceaux de viande se présentant sous la forme de lanières,
   – le malaxage des morceaux de viande avec injection de neige carbonique, de manière à abaisser la température des morceaux à une valeur sensiblement comprise entre 0°C et - 2°C, et à obtenir un amas de morceaux enchevêtrés les uns avec les autres,
   – le pressage, à une pression de 8 à 12 bars, de quantités déterminées de ces morceaux, de manière à réaliser des blocs de viande présentant une bonne cohésion ;
   – le stockage temporaire, avant tranchage, dans une enceinte à l'intérieur de laquelle la température est maintenue à une valeur de - 5°C.

4. Procédé selon l'une des revendications précédentes,
caractérisé en ce qu'il comprend une phase de pulvérisation d'un liant sur les feuilles de viande produites lors du tranchage.

5. Procédé selon l'une des revendications précédentes,
caractérisé par la réalisation, lors de la phase de tranchage, de tranches de différentes épaisseurs issues de plusieurs appareils de tranchage ou d'un appareil à éléments de tranchage multiples.

6. Appareillage pour la mise en oeuvre du procédé selon l'une des revendications précédentes, ce dispositif faisant intervenir des moyens de transport (4) aptes à acheminer les morceaux de viande (1) depuis un poste de production jusqu'à la goulotte d'accès à un dispositif de pressage ou d'extrusion (3) apte à assurer une compression des morceaux de manière à produire à sa sortie, de façon continue ou discontinue, un bloc composé de morceaux agglomérés les uns aux autres, des moyens de tranchage (9, 10, 11) disposés de manière à découper en tranches fines ledit bloc, et des moyens de réception desdites tranches,
caractérisé en ce que les moyens de tranchage comprennent des moyens de guidage des blocs selon un axe déterminé, ainsi qu'au moins un disque rotatif de tranchage (11) placé dans un plan perpendiculaire ou, éventuellement, oblique par rapport audit axe, lesdits moyens de guidage et ledit disque étant animés d'un mouvement relatif, l'un par rapport à l'autre selon une course au moins égale à la somme du diamètre du disque et de la longueur de coupe du bloc, de manière à ce que, lors de la course aller, l'entame s'effectue d'un premier côté du bloc et que, lors de la course de retour, l'entame s'effectue au niveau d'un second côté opposé au premier.

7. Appareillage selon la revendication 6,
caractérisé en ce qu'il comprend en outre, dans le trajet des susdits moyens de transport (4), une unité de refroidissement énergique (5), apte à porter rapidement la superficie des blocs à une température de -30°C à -40°C, et en ce que la vitesse d'avance des moyens de transport (4) est prévue de manière à ce qu'à l'entrée dans la goulotte, la température à l'intérieur des blocs soit de 0 à -6°C.

8. Appareillage selon la revendication 6,
caractérisé en ce que les susdits moyens de transport consistent en un convoyeur à bande sans fin (4).

9. Appareillage selon la revendication 6,
caractérisé en ce que ledit convoyeur est une vis d'Archimède (15).

10. Appareillage selon l'une des revendications 6 à 9,
caractérisé en ce que le susdit dispositif d'extrusion comprend un corps tubulaire (3) à l'intérieur duquel est montée rotative une vis sans fin (6), l'espace formé entre l'extrémité inférieure de cette vis et l'orifice de sortie du corps constituant une chambre d'extrusion (8).

11. Appareillage selon l'une des revendications 6 à 9,
caractérisé en ce que le susdit dispositif d'extrusion comprend un corps tubulaire (17) à l'intérieur duquel est monté coulissant un piston (18) mû par son propre poids ou bien par l'intermédiaire d'un vérin (19), la partie inférieure du corps (3) formant la chambre d'extrusion.

12. Appareillage selon l'une des revendications 6 à 9,
caractérisé en ce que le susdit dispositif d'extrusion comprend, entre une trémie d'entrée (21) et une goulotte de sortie (22), des moyens d'entraînement pouvant consister en des bandes sans fin (23, 23') munies de nervurations (24).

13. Appareillage selon l'une des revendications 6 à 11,
caractérisé en ce qu'il comprend des moyens (20) permettant d'effectuer une injection de fluide réfrigérant dans la chambre d'extrusion.

14. Appareillage selon l'une des revendications 6 à 13,
caractérisé en ce que les susdits moyens de tranchage comprennent un plateau (9) mobile en translation dans son plan sous l'orifice de sortie (7) du dispositif d'extrusion (3), ce plateau (9) présentant un orifice circulaire (10), et en ce que le disque de tranchage (11) est monté rotatif coaxialement à cet orifice (10), à une hauteur réglable en fonction de l'épaisseur des tranches que l'on désire obtenir.

15. Appareillage selon la revendication 6,
caractérisé en ce que les moyens de tranchage comprennent, montés sur un même plateau (25) mobile en translation selon un mouvement alternatif, une pluralité de disques tranchants (27) situés en regard d'orifices correspondants, chacun de ces disques (27) étant affecté à un dispositif d'extrusion distinct (28).

16. Appareillage selon la revendication 6,
caractérisé en ce que les moyens de tranchage comprennent un plateau circulaire (30) doué d'un mouvement de rotation alternatif et comprenant une pluralité d'orifices respectivement équipés de disques de tranchage (32), chacun de ces disques (32) étant affecté à un dispositif d'extrusion respectif (33).

17. Appareillage selon la revendication 6,
caractérisé en ce que les susdits moyens de pressage comprennent une trémie (40) munie d'un malaxeur (41) et dans le fond de laquelle coulisse un piston (44) qui s'engage, en fin de course, dans une chambre de pressage (45) dont l'orifice de sortie (48), par lequel les blocs de viande sont extraits, est muni d'une porte coulissante (49).

18. Appareillage selon la revendication 17, caractérisé en ce que les susdits moyens de pressage comprennent des moyens d'injection de neige carbonique à l'intérieur de la trémie (40).

19. Appareillage selon la revendication 17, caractérisé en ce qu'il comprend une enceinte (47) de stockage des blocs (52) disposée à la sortie des moyens de pressage ainsi que des moyens permettant de stabiliser l'atmosphère régnant à l'intérieur de cette enceinte (47) à une température de -5°C.

20. Appareillage selon l'une des revendications 17 à 19, caractérisé en ce que les moyens de tranchage se présentent sous la forme d'une table (55) dont le plateau (56) présente au moins un orifice (58) au-dessus duquel est monté rotatif un disque de tranchage (60) réglable en hauteur, et en ce qu'au-dessus de ce plateau (56) est prévue une structure oscillante (61) portant au moins un magasin (63) destiné à recevoir les susdits blocs (52), des moyens de pressage (71) étant prévus pour assurer le déplacement des blocs (52) contenus dans le magasin (63), en direction du plateau (56).

21. Appareillage selon l'une des revendications 17 à 20, caractérisé en ce que les tranches découpées par les moyens de tranchage tombent sur un transporteur (70) à deux vis sans fin (72, 72') tournant en sens inverse gui les amène jusqu'au poste de mise en forme des produits (73).

22. Appareillage selon la revendication 21, caractérisé en ce qu'il comprend des moyens effectuant la pulvérisation (74) d'un liant sur les susdites tranches, au cours de leur chute.

23. Appareillage selon l'une des revendications 17 à 22, caractérisé en ce que le poste de mise en forme comprend des moyens de pressage (76) des tranches produisant des portions de viande reconstituée et des moyens (73) de mise sous vide temporaire de ces portions.

24. Appareillage selon l'une des revendications 17 à 22, caractérisé en ce que le poste de mise en forme comprend une extrudeuse (83 à 87) permettant d'effectuer une extrusion sous vide des tranches.

## Patentansprüche

1. Verfahren für die Zubereitung von aus dünnen Fleischscheiben zusammengesetzten Nahrungsmittelprodukten, wobei dieses Verfahren aufweist : eine Phase zur Kühlung der vorzugsweise streifenförmigen Fleischstücke, eine Phase zur Formung der gekühlten Fleischstücke zu Klumpen, eine Schneidphase der Klumpen in ultrafeine Scheiben und eine Formphase der Fleischscheibenpakete zu einem verzehrfertigen Endprodukt,
dadurch gekennzeichnet, dass die Klumpen mittels einer vorzugsweise rotierenden Schneide geschnitten werden, indem der Einschnitt wechselweise auf der einen und der anderen Seite des Klumpens erfolgt.

2. Verfahren nach Anspruch 1, dadurch gekennzeichnet, dass die Kühlphase durch ein Mittel zur drastischen Kühlung erfolgt, welches die Oberfläche der Fleischstücke schnell auf eine Temperatur zwischen -30°C und -40°C abkühlen kann und auf diese Kühlphase eine Stabilisierungsphase folgt, die so durchgeführt wird, dass nach ihrer Beendigung die Temperatur im Inneren der Fleischstücke zwischen 0 und -6°C beträgt.

3. Verfahren nach Anspruch 1, dadurch gekennzeichnet, dass die Fleischklumpen nach einem Verfahren hergestellt werden, welches die folgenden Phasen aufweist :
   – die Herstellung von streifenförmigen Fleischstücken,
   – das Durchkneten der Fleischstücke, unter Einführung von Trockeneis zur Senkung der Temperatur der Fleischstücke auf einen in etwa zwischen 0°C und -2°C liegenden Wert und zur Erhaltung eines Haufens von ineinander verkeilten Fleischstücken,
   – das Pressen, mit einem Druck von 8 bis 12 Bar, von bestimmten Fleischstückmengen zur Erhaltung von Fleischklumpen mit gutem Zusammenhalt,
      -- die kurzzeitige Aufbewahrung vor dem Schneiden in einem Raum, wo die Temperatur auf einem Wert von -5°C gehalten wird.

4. Verfahren nach einem der vorhergehenden Ansprüche, dadurch gekennzeichnet, dass es eine Phase aufweist, wo ein Bindemittel auf die in der Schneidphase erhaltenen Fleischscheiben gesprüht wird.

5. Verfahren nach einem der vorhergehenden Ansprüche, dadurch gekennzeichnet, dass man während der Schneidphase Scheiben verschiedener Dicke erhält, entweder aus verschiedenen Schneidapparaten oder aus einem Apparat mit mehreren Schneidelementen.

6. Vorrichtung zur Ausführung des Verfahrens nach einem der vorhergehenden Ansprüche, wobei besagte Vorrichtung einsetzt : Transportmittel (4), welche die Fleischstücke (1) von einer Herstellungsstation bis zu einer Zugangsrutsche zu einer Press- oder Extrusionsvorrichtung (3) transportiert, welche die Fleischstücke presst und an ihrem Ausgang regelmässig oder unregelmässig einen Klumpen aus zusammengeballten Fleischstücken bildet, Schneidemittel (9, 10, 11), die so angeordnet sind, dass sie den besagten Klumpen in dünne Scheiben schneiden und Annahmemittel für besagte Scheiben,
dadurch gekennzeichnet, dass die Schneidemittel Mittel für die Führung der Klumpen entlang einer bestimmten Achse aufweisen, sowie mindestens eine, in einer Ebene senkrecht oder eventuell schräg zu besagter Achse angeordnete Schneidscheibe (11), wobei besagte Führungsmittel und besagte Scheibe eine relative Bewegung im Verhältnis zueinander ausführen, mit einem Hub, der mindestens der Summe des Scheibendurchmessers und der Schnittlänge des Klumpens entspricht, sodass, beim Vorwärtshub, der Einschnitt auf einer ersten Seite erfolgt und beim Rückwärtshub auf einer zweiten, der ersten gegenüberliegenden, Seite.

7. Vorrichtung nach Anspruch 6,
dadurch gekennzeichnet, dass sie ausserdem, in der Bahn der besagten Transportmittel (4), eine Einheit (5) zur drastischen Kühlung aufweist, welche die Oberfläche der Klumpen schnell auf eine Temperatur von -30°C bis -40°C absenken kann und dass die Vorschubgeschwindigkeit der Transportmittel (4) so vorgesehen ist, dass am Eingang der Rutsche die Temperatur im Inneren der Klumpen 0 bis -6°C beträgt.

8. Vorrichtung nach Anspruch 6,
dadurch gekennzeichnet, dass besagte Transportmittel aus einem endlosen Band (4) bestehen.

9. Vorrichtung nach Anspruch 6,
dadurch gekennzeichnet, dass besagtes Förderband eine Archimedische Schnecke (15) ist.

10. Vorrichtung nach einem der Ansprüche 6 bis 9,
dadurch gekennzeichnet, dass besagte Extrusionsvorrichtung einen rohrförmigen Körper (3) aufweist, in dem eine endlose Schraube (6) drehbar montiert ist und dass der Raum zwischen dem unteren Ende der besagten Schraube und der Ausgangsöffnung des Körpers eine Extrusionskammer (8) bildet.

11. Vorrichtung nach einem der Ansprüche 6 bis 9,
dadurch gekennzeichnet, dass die besagte Extrusionsvorrichtung einen rohrförmigen Körper aufweist (17), in dem ein Kolben (18) unter seinem Eigengewicht oder unter der Wirkung eines Zylinders (19) gleitet und der untere Teil des Körpers (3) die Extrusionskammer bildet.

12. Vorrichtung nach einem der Ansprüche 6 bis 9,
dadurch gekennzeichnet, dass besagte Extrusionsvorrichtung zwischen einem Eingangstrichter (21) und einer Ausgangsrutsche (22) Antriebsmittel aufweist, die aus mit Rippen (24) versehenen endlosen Bändern (23, 23') bestehen können.

13. Vorrichtung nach einem der Ansprüche 6 bis 11,
dadurch gekennzeichnet, dass sie Mittel (20) aufweist, durch welche eine Kühlflüssigkeit in die Extrusionskammer eingespritzt werden kann.

14. Vorrichtung nach einem der Ansprüche 6 bis 13,
dadurch gekennzeichnet, dass besagte Schneidemittel eine Platte (9) aufweisen, welche in der Ebene unter der Ausgangsöffnung (7) der Extrusionsvorrichtung (3) verschiebbar ist und diese Platte (9) eine kreisförmige Öffnung (10) aufweist, und dass die Schneidscheibe (11) koaxial zu besagter Öffnung (10) drehbar montiert ist und die Montierhöhe je nach der Dicke der gewünschten Scheiben einstellbar ist.

15. Vorrichtung nach Anspruch 6,
dadurch gekennzeichnet, dass die Scheidemittel auf derselben Platte (25) und abwechselnd verschiebbar eine Vielzahl von gegenüber entsprechenden Öffnungen angeordneten Schneidscheiben (27) aufweisen und jede dieser Scheiben (27) einer bestimmten Extrusionsvorrichtung (28) zugeordnet ist.

16. Vorrichtung nach Anspruch 6,
dadurch gekennzeichnet, dass die Schneidemittel eine kreisförmige Scheibe (30) aufweisen, die abwechselnd in einer und der anderen Richtung rotiert und eine Vielzahl von jeweils mit Schneidscheiben (32) versehenen Öffnungen aufweist, und jede dieser Scheiben (32) einer bestimmten Extrusionsvorrichtung (33) zugeordnet ist.

**17.** Vorrichtung nach Anspruch 6,
dadurch gekennzeichnet, dass die besagten Druckmittel einen mit einer Knetvorrichtung (41) versehen Trichter (40) aufweisen, in dessen unterem Teil ein Kolben (44) gleitet, der, am Ende seines Hubs, in eine Druckkammer (45) eindringt, deren Ausgangsöffnung (48), durch welche die Fleischklumpen austreten, mit einer Schiebetür (49) versehen ist.

**18.** Vorrichtung nach Anspruch 17,
dadurch gekennzeichnet, dass besagte Druckmittel Mittel zum Einspritzen von Trockeneis in den Trichter (40) aufweisen.

**19.** Vorrichtung nach Anspruch 17,
dadurch gekennzeichnet, dass sie einen, am Ausgang der Druckmittel angeordneten Raum (47) zur Lagerung der Fleischklumpen (52) aufweist, sowie Mittel zur Stabilisierung der im Inneren dieses Raumes (47) herrschenden Temperatur auf -5°C.

**20.** Vorrichtung nach einem der Ansprüche 17 bis 19,
dadurch gekennzeichnet, dass die Schneidemittel die Form eines Tisches (55) haben, dessen Platte (56) mindestens eine Öffnung (58) aufweist und oberhalb dieser eine Schneidscheibe (60) drehbar montiert ist, deren Höhe einstellbar ist und dass, oberhalb dieser Platte (56), eine Pendelstruktur (61) vorgesehen ist, mit mindestens einem Reservoir (63) zur Aufnahme der besagten Klumpen (52) und Druckmittel (71) vorgesehen sind, um die im Reservoir (63) enthaltenen Klumpen (52) in Richtung der Platte (56) vorzuschieben.

**21.** Vorrichtung nach einem der Ansprüche 17 bis 20,
dadurch gekennzeichnet, dass die durch die Schneidemittel erhaltenen Fleischscheiben auf eine Transportvorrichtung (70) fallen, die mit zwei endlosen, in entgegensetzter Richtung rotierenden Schrauben versehen ist und die Scheiben bis zur Formgebungsstation,(73) der Produkte transportiert.

**22.** Vorrichtung nach Anspruch 21,
dadurch gekennzeichnet, dass sie Mittel (74) aufweist, um ein Bindemittel auf besagte Scheiben zu sprühen,während diese herabfallen.

**23.** Vorrichtung nach einem der Ansprüche 17 bis 22,
dadurch gekennzeichnet, dass die Formgebungsstation Mittel (76) aufweist, um besagte Scheiben zusammenzupressen und so Portionen aus neu zusammengesetztem Fleisch zu erhalten, sowie Mittel (73), um besagte Portionen eine Zeit lang unter Vakuum zu setzen.

**24.** Vorrichtung nach einem der Ansprüche 17 bis 22,
dadurch gekennzeichnet, dass die Formgebungsstation eine Extrudiervorrichtung (83 bis 87) aufweist, mit der die Scheiben in einem Vakuum extrudiert werden können.

**Claims**

**1.** A method for preparing food products formed of slices of meat, this method comprising a phase for chilling the pieces of meat, preferably in the form of strips, a phase for molding the cooled pieces into blocks, a phase for slicing the blocks into ultrafine slices and a phase for shaping the packets of slices, so as to obtain a finished product ready for consumption,
characterized in that the blocks are sliced by means of a blade, preferably rotary, by cutting alternately on one side, then the other of the block.

**2.** The method as claimed in claim 1,
characterized in that the cooling phase uses an energetic cooling means, capable of rapidly cooling the surface of the pieces to a temperature comprised between -30° and -40°C, this cooling phase being followed by a stabilization phase carried out so that, when finished, the inside temperature of the pieces reaches a temperature between 0 and -6°C.

**3.** The method as claimed in claim 1,
characterized in that the blocks of meat are formed using a method comprising the following phases :
– formation of pieces of meat in strips,
– mixing of the pieces of meat with injection of carbon-dioxide snow, so as to lower the temperature of the pieces of meat to a value substantially between 0°C and -2°C, and to obtain a heap of pieces jumbled together,
– pressing, at a pressure of 8 to 12 bars, of given amounts of these pieces of meat, so as to form blocks of meat having good cohesion,
– temporary storage, before slicing, in an enclosure inside which the temperature is kept at a value of -5°C.

**4.** The method as claimed in one of the preceding claims,
characterized in that it comprises a phase for spraying a binder on the meat slices produced at the time of slicing.

**5.** The method as claimed in one of the preceding claims,
characterized in that slices of different thicknesses, coming from several slicing apparatus or one apparatus with multiple slicing elements are formed during the slicing phase.

6. An apparatus for implementing the method as claimed in one of the preceding claims, comprising a transport means (4) conveying the pieces of meat (1) from a production station to the channel giving access to a pressing or extrusion device (3) compressing the pieces so as to produce at its output, continuously or discontinuously, a block formed of pieces agglomerated together, slicing means (9, 10, 11) disposed for cutting said block into fine slices and means for receiving said slices,
characterized in'that said slicing means comprise means for guiding the blocks along a given axis, as well as at least one rotary slicing disk (11) placed in a plane perpendicular or, possibly oblique, with respect to said axis, said guide means and said disk being driven with a relative movement with respect to each other, along a path at least equal to the sum of the diameter of the disk and the cutting length of the block, so that, during the outward travel, the cut takes place on a first side of the block and, during the return travel, the cut takes place at a second side opposite the first one.

7. The apparatus as claimed in claim 6, characterized in that it further comprises in the path of said transport means (4) an energetic cooling unit (5) capable of cooling the surface of the blocks rapidly to a temperature of -30°C to -40°C, and in that the advancing speed of said transport means (4) is provided so that, at the inlet to the channel, the temperature inside the blocks is 0 to -6°C.

8. The apparatus as claimed in claim 6, characterized in that said transport means consist of an endless belt conveyor (4).

9. The apparatus as claimed in claim 6, characterized in that said conveyor is an Archimedes screw (15).

10. The apparatus as claimed in one of claims 6 to 9, characterized in that said extrusion device comprises a tubular body (3) inside which an endless screw (6) is mounted for rotation, the space formed between the lower end of this screw and the outlet orifice of the body forming an extrusion chamber (8).

11. The apparatus as claimed in one of claims 6 to 9, characterized in that said extrusion device comprises a tubular body (17) inside which a piston (18) is mounted for sliding, driven by its own weight or else by means of a jack (19), the lower part of the body (3) forming the extrusion chamber.

12. The apparatus as claimed in one of claims 6 to 9, characterized in that said extrusion device comprises, between an input hopper (21) and an outlet channel (22), drive means which may consist of endless belts (23, 23') provided with ribs (24).

13. The apparatus as claimed in one of claims 6 to 11, characterized in that it comprises means (20) for injecting cooling fluid into the extrusion chamber.

14. The apparatus as claimed in one of claims 6 to 13, characterized in that said slicing means comprise a plate (9) movable in translation in its plane under the outlet orifice (7) of the extrusion device (3), said plate (9) having a circular orifice (10), and in that said slicing disk (11) is mounted for rotation coaxially with this orifice (10) at a height which is adjustable as a function of the thickness of the slices it is desired to obtain.

15. The apparatus as claimed in claim 6, characterized in that said slicing means comprise, mounted on the same plate (25) movable in translation by a reciprocating movement, a plurality of slicing disks (27) situated opposite corresponding orifices, each of these disks (27) being assigned to a distinct extrusion device (28).

16. The apparatus as claimed in claim 6, characterized in that said slicing means comprise a circular plate (30) driven with an alternating rotational movement and comprising a plurality of orifices equipped respectively with slicing disks (32), each of these disks (32) being assigned to a respective extrusion device (33).

17. The apparatus as claimed in claim 6, characterized in that said pressing means comprise a hopper (40) having a mixer (41) and in the bottom of which slides a piston (44) which engages, at the end of travel, in a pressing chamber (45) whose outlet orifice (48), through which the blocks of meat are removed, is provided with a sliding door (49).

18. The apparatus as claimed in claim 17, characterized in that said pressing means comprise means for injecting carbon-dioxide snow inside the hopper (40).

19. The apparatus as claimed in claim 17, characterized in that it comprises an enclosure (47) for storing the blocks (52) disposed at the outlet of the pressing means as well as means for stabilizing the atmosphere prevailing inside this enclosure (47) at a temperature of -5°C.

20. The apparatus as claimed in one of claims 17 to 19,
characterized in that said slicing means are in the form of a table (55) whose plate (56) has at least one orifice (58) above which is mounted for rotation a slicing disk (60) which is adjustable in height, and in that, above this plate (56), is provided an oscillating structure (61) carrying at least one magazine (63) intended to receive said blocks (52), pressing means (71) being provided for moving the blocks (52) contained in the magazine (63) in the direction of the plate (56).

21. The apparatus as claimed in one of claims 17 to 20,
characterized in that the slices cut by said slicing means fall on to a transporter (70) with two endless screws (72, 72') rotating in opposite directions which bring them to the station (73) for shaping the products.

22. The apparatus as claimed in claim 21,
characterized in that it comprises means (74) for spraying a binding agent on said slices, during their fall.

23. The apparatus as claimed in one of claims 17 to 22,
characterized in that the shaping station comprises means (76) for pressing the slices, producing reconstituted meat portions and means (73) for placing these portions temporarily in a vacuum.

24. The apparatus as claimed in one of claims 17 to 22,
characterized in that said shaping station comprises an extruder (83 to 87) for extruding the slices in a vacuum.

FIG.1

FIG.2

FIG.3

FIG.4

FIG.5

FIG.6

FIG.7

# FIG. 8

EP 0 336 798 B1

EP 0 336 798 B1

FIG.10

FIG.9

## FIG. 11

70

72    72'

## FIG. 12

73

81

82

79

78    77    70

76

80

## FIG. 13

83    70

85

86    87    84

EP 0 336 798 B1